# EUROPEAN PATENT SPECIFICATION

(11) **EP 3 398 785 B1**
(45) Date of publication and mention of the grant of the patent: **26.02.2020**
(21) Application number: 18169208.8
(22) Date of filing: 25.04.2018
(51) Int. Cl.: B41J 3/60, B41J 11/46, B41J 13/26, B41J 11/00, H04N 1/00

(54) **DUPLEX PRINTING METHOD**
VERFAHREN ZUM DOPPELSEITIGEN DRUCKEN
PROCÉDÉ D'IMPRESSION EN DUPLEX

(30) Priority: 02.05.2017 EP 17168995
(43) Date of publication of application: 07.11.2018
(73) Proprietor: OCE Holding B.V., 5914 CA Venlo (NL)
(72) Inventor: DINNISSEN, Johannes H.A., 5914 CA VENLO (NL); VAN BREUGEL, Leon C., 5914 CA Venlo (NL)
(74) Representative: OCE IP Department

(56) References cited:
- EP-A1- 1 844 944
- US-A1- 2002 181 021
- US-A1- 2005 175 386
- US-A1- 2010 278 573
- US-A1- 2011 148 972

## Description

### BACKGROUND OF THE INVENTION

### 1. Field of the invention

The invention relates to a method of duplex printing, comprising the steps of:
a) feeding a media sheet past a print head assembly in a first pass and printing a front side image on a front side of the sheet;
b) measuring a skew angle of a first edge of the sheet relative to a reference direction, the first edge being a trailing edge of the sheet in the first pass;
c) flipping the sheet and feeding it to the print head assembly with the first edge as the leading edge;
d) calculating and performing a rotation of the sheet relative to a back side image to be printed on the back side of the sheet, the rotation being required for registering the back side image with the front side image; and
e) printing the back side image in a second pass.

In a print process it is generally desired that a leading edge of the printed front side image, which edge defines a lateral direction of the image, is aligned with the leading edge of the sheet. If the sheet is fed in a skewed position, it is common practice to rotate the sheet so as to align the leading edge of the sheet with the lateral direction of the image. Since the leading edge of the sheet and the leading edge of the image are normally separated by a certain margin, a slight misalignment of the two edges is hardly perceptible with the naked eye. Consequently, the skew angle correction needs to be performed only with a limited accuracy.

In duplex printing, however, a "shadow" of the back side image is in many cases visible from the front side of the sheet because the sheet has a certain translucency. Consequently, the positions of the edges of the back side image can be compared directly with the positions of the corresponding edges of the front side image, and even minor misalignments become visible and are found disturbing. Even when the sheet is totally opaque, a misalignment of the front side and back side images may be found disturbing, for example, when a multi-page duplex document is bound into a booklet, so that a front side image and a back side image are visible simultaneously. Likewise, when a multi-page duplex document is scanned-in and the scanned document is scrolled on a computer screen, the differences between the lateral directions of the front side images and back side images become perceptible.

If the leading edge and the trailing edge of the sheet are not exactly parallel to one another, and if the skew angle of the leading edge is corrected before printing the front side image in the first pass, and, in the second pass, the skew angle of the leading edge, which has formerly been the trailing edge, is corrected by rotating the sheet, then the front side image and the back side image will be rotated relative to one another by a relatively large angle which is twice the angle between the leading and trailing edges of the sheet.

### 2. Description of Background Art

US 7 456 995 B2 discloses a method of the type indicated above, which attempts to register the back side image with the front side image by calculating a rotation of the sheet (or of the image) on the basis of a detected non-parallelism between the leading edge and the trailing edge of the sheet.

### SUMMARY OF THE INVENTION

It is an object of the invention to improve the accuracy in registering the back side image and the front side image in duplex printing.

In order to achieve this object, according to the invention, step a) comprises printing on the sheet at least two marks which define a lateral direction of the front side image, and said lateral direction is used as the reference direction in step b).

Thus, the orientation of the first edge of the sheet, which becomes the leading edge in the second pass, is related directly to the lateral direction of the image that has been printed in the first pass. This permits to calculate a rotation which precisely corrects the skew angle difference between the front side and the back side image, and when, in the second pass, the orientation of the sheet (or the image) is adjusted to the angle that has been calculated in this way, a perfect registry of the front side and back side images will be obtained.

By comparison, if the direction of the second edge of the sheet, which is the leading edge in the first pass, would be taken as the reference direction, then the accuracy of the correction would be inferior, because it cannot always be taken for granted that the front side image is really aligned with the second edge (leading edge in the first part) of the sheet which sufficient accuracy.

The invention also permits to eliminate all mounting tolerances that may affect the alignment of the print head assembly (and hence the lateral direction of the printed images) with the detection system that is used for measuring the skew angles.

It will be observed that, in the method defined above, the order of the steps c) and d) is not mandatory and may be reversed.

More specific optional features of the invention are indicated in the dependent claims.

The at least two marks printed in step a) may form part of the front side image that has to be printed anyway. For example, the marks may be constituted by an edge, preferably the trailing edge, of the front side image or, if the image contains text, a base line of a text line in the front side image. It may be advantageous when the two marks are separated from the first edge of the sheet only by a relatively small distance, because this will simplify the design of the measuring equipment for measuring the skew angle and may also help to improve the accuracy of the measurement.

It is clear that the detection equipment must be positioned downstream of the print head assembly in order to be able to detect the printed marks. In a preferred embodiment, the detection equipment is arranged such that it is also capable of detecting the second edge, which is the leading edge of the sheet in the first pass, before the print process for the front side image starts. In that case, the detection equipment may be used also for a skew angle correction of the leading sheet edge in the first pass.

Preferably, the detection equipment includes an optical sensor system which has a field of view that contains, at least at a certain instant during the feed movement of the sheet, both the printed marks and the first edge of the sheet.

### BRIEF DESCRIPTION OF THE DRAWINGS

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description. An embodiment example will now be described in conjunction with the drawings, wherein:
- Fig. 1: is a schematic side view of a duplex printer to which the invention is applicable;
- Fig. 2: is a top plan view of the printer shown in Fig. 1;
- Fig. 3: is a side view of the printer as in Fig. 1, but for a different operational state of the printer;
- Fig. 4: is a top plan view for the state of the printer shown in Fig. 3;
- Figs. 5 and 6: are top plan views illustrating a later operational state of the printer;
- Fig. 7: is a flow diagram illustrating essential steps of a method according to the invention; and
- Fig. 8: is a top plan view of another embodiment of a printer according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

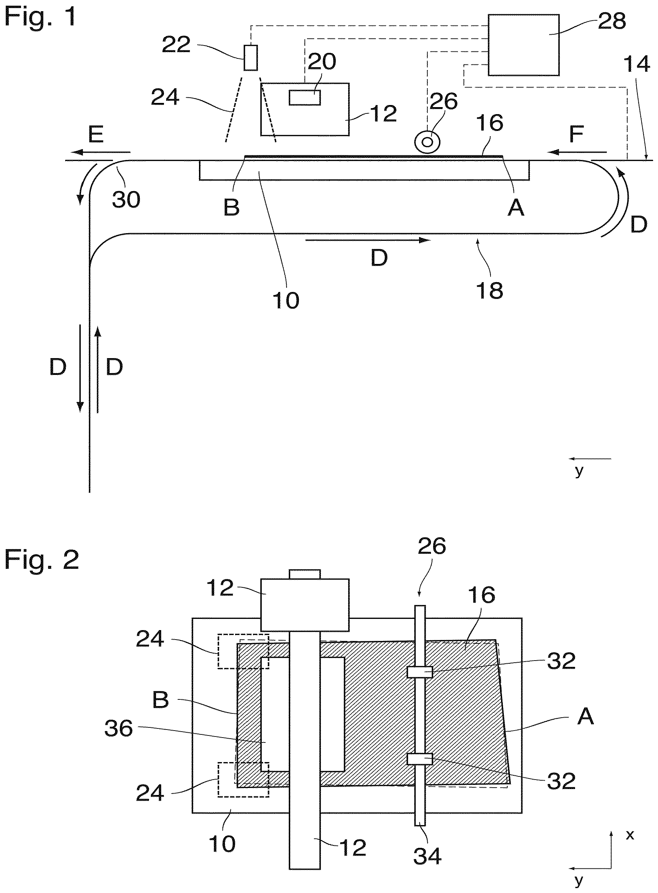

As is shown in Fig. 1, a printer comprises a print surface 10, a print head simply 12, and a sheet conveying system 14 arranged to feed media sheets 16 over the print surface 10 and past the print head assembly 12. The printer being a duplex printer, the sheet conveying system 14 comprises a duplex loop 18 and is arranged to feed fresh media sheets onto the print surface 10, as indicated by an arrow F, to flip the sheets onto which a front side image has been printed and to return them to the print surface 10 via the duplex loop 18, as indicated by arrows D, and to eject the sheets on which images have been formed on both sides to a discharge port, as indicated by an arrow E.

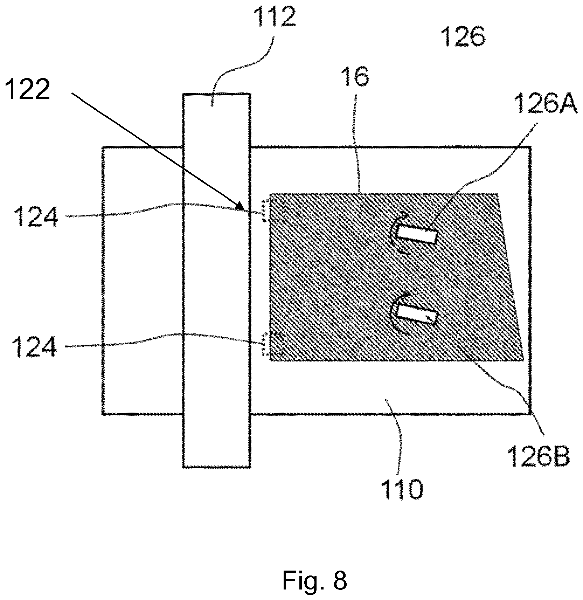

The print head assembly 12, e.g. an ink jet print head assembly, is mounted on a carriage that is arranged to travel along a guide rail 20 that extends in a lateral direction x (Fig. 2) of the print surface 10 normal to a longitudinal direction y in which the sheets 16 are fed over the print surface 10. It will be understood that the lateral direction x is a main scanning direction, and the longitudinal direction y is a sub-scanning direction of the print head assembly 12. Alternatively, a stationary page-wide print head assembly may be applied as shown in Fig. 8.

An optical detection system 22 is provided downstream of the print head assembly 12 in the main scanning direction and is arranged to observe a certain field of view 24 on the print surface.

A skew angle correction system 26 is provided upstream of the print head assembly 12 for correcting possible skew angles of the sheets 16.

An electronic controller 28 receives detection results from the optical detection system 22 and sends control commands to the print head assembly 12, the skew angle correction system 26 and the sheet conveying system 14. It will be understood that the sheet conveying system comprises an arrangement of transport rollers and guide members, which have not been shown here, as well as a switch 30 for directing the sheets that leave the print surface 10 either into the duplex loop 18 or to the ejection port.

In the condition shown in Fig. 1, the sheet 16 is a fresh sheet which has been fed onto the print surface 16 in a first print pass for printing a front side image onto a front side of the sheet, the front side being the top side of the sheet in Fig. 1. The sheet has a first edge A and a second edge B. In the first print pass shown in Fig. 1, the first edge A constitutes the trailing edge of the sheet, and the second edge B constitutes the leading edge. The leading second edge B is within the field of view 24 of the optical detection system 22, so that a possible skew angle between the direction of the second edge B and the lateral direction x can be measured with the detection system 22. If necessary, the skew angle correction system 26 is controlled to correct the skew angle before the print process starts.

Fig. 2 illustrates the same situation as Fig. 1, but in a top plan view. The skew angle correction system 26 comprises two rollers 32 which are separated from one another in the lateral direction x and are rotatable on a common axis 34. The rollers 32 are in frictional engagement with the sheet 16 and can be driven with differential speeds so as to cause a rotation of the sheet 16 about a vertical axis normal to the x-y-plane.

The field of view 24 of the optical detection system is constituted by two rectangular zones which, in the situation shown in Fig. 2, each include a part of the second edge B (leading edge) of the sheet 16 as well as one of the longitudinal edges of the sheet. The sheet 16 has been rotated such that the second edge B is parallel to the lateral direction x, as can be confirmed by means of the optical detection system. Further, the optical detection system can measure the lateral position of the sheet 16, and the controller 28 can accordingly control the print head assembly 12 so as to print a front side image 36 which has a desired lateral position relative to the sheet 16 and is aligned with the direction of the second edge B of the sheet.

In the situation shown in Fig. 2, the print head assembly 12 has just completed its first scan pass in the main scanning direction and has printed a first swath of the image 36. In the example shown, the leading edge of the printed first swath of the image 36 is also included in the field of view 24. This permits to calibrate the optical detection system 22 by checking the position of the leading edge of the image 36.

As the print operation proceeds, the sheet 16 is advanced step-wise in +y-direction (to the left in Fig. 1), and successive swathes of the image 36 are printed with the print head assembly 12 until the end of the image is reached.

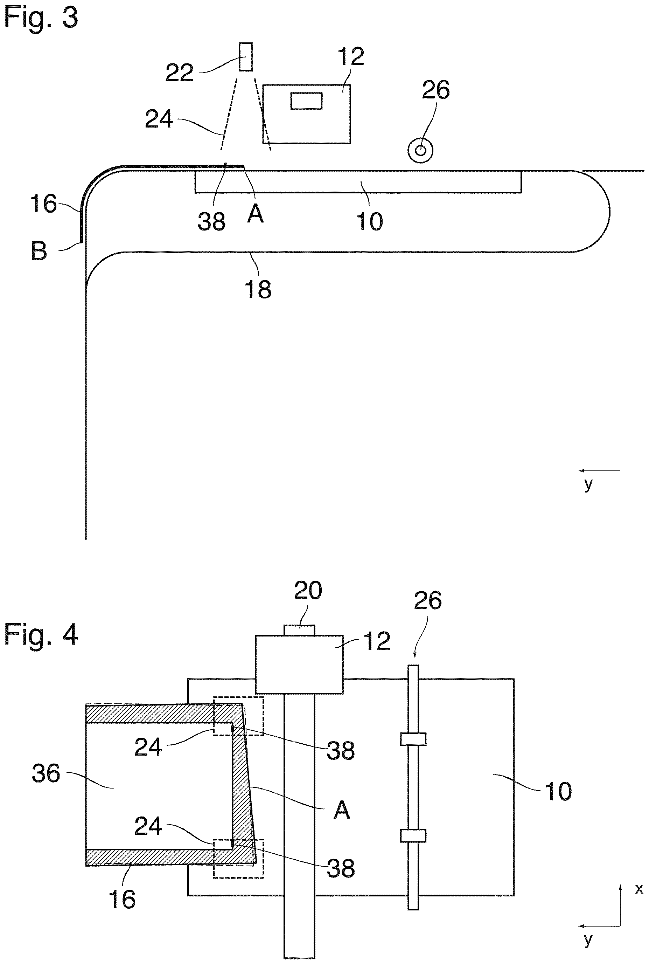

Figs. 3 and 4 illustrate a situation where the print process for the front side image of the sheet 16 has been completed. The leading second edge B of the sheet 16 has entered into the duplex loop 18, and the trailing first edge A is located within the field of view 24 of the detection system 22. By means of the print head assembly 12, two marks 38 have been printed onto the sheet 16 in the vicinity of the first edge A.

As is shown in Fig. 4, the two marks 38 form part of a straight line that defines the trailing edge of the printed image 36 and thereby also defines the lateral direction x of the image. The two marks 38 as well as parts of the trailing first edge A of the sheet 16 are located within the field of view 24 of the optical detection system 22.

As has been shown exaggeratedly in the drawings, the first edge A of the sheet 16 is not parallel to the second edge B (see Fig. 2), but forms a certain angle therewith. Since the printed front side image 36 is at least roughly aligned with the second edge B of the sheet, the first edge A also forms a certain angle with the straight line that is defined by the marks 38.

The optical detection system 22 may for example be formed by two stationary digital cameras which have respective rectangular fields of view which, together, form the field of view 24. By capturing digital images of the marks 38 and of the corresponding parts of the first edge A of the sheet, it is possible to determine the angle formed between the first edge A and the straight line defined by the marks 38 with high accuracy. Further, the marks 38 can be used for calibrating the optical detection system as to its position in the longitudinal direction y.

If the trailing edge of the printed image 36 happens to delimit colored areas of the image, the straight boundaries of these colored areas may be taken as the marks 38, so that, in order to form the marks 38, nothing needs to be printed in addition to the image contents of the image 36. Otherwise, if the trailing edge of the image 36 does not delimit any colored area of the image, the marks 38 may be formed by printing faint lines onto the sheet 16.

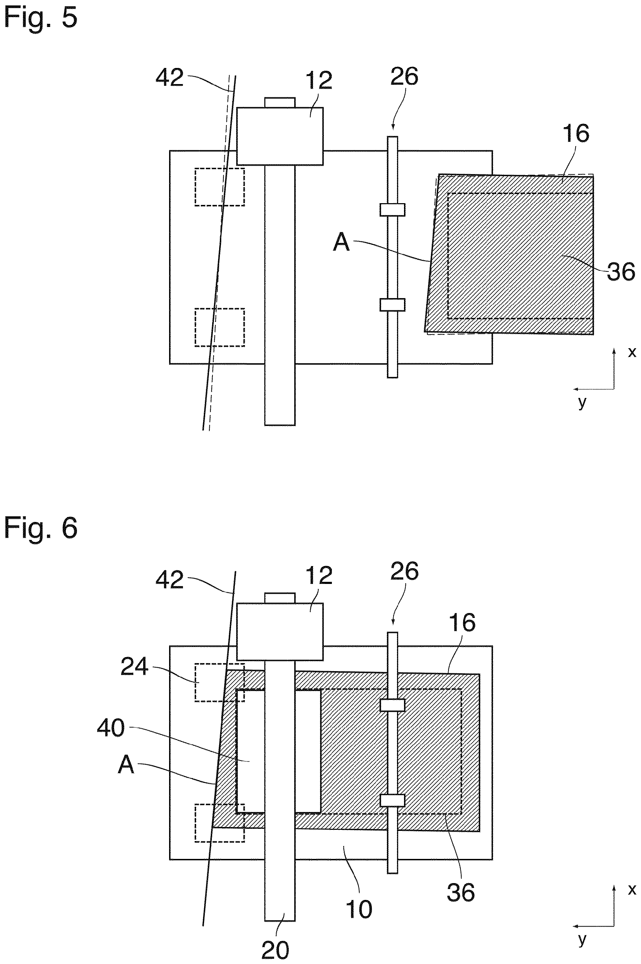

When the angle between the first edge A of the sheet and the trailing edge of the image 36 has been measured, the sheet 16 is looped through the duplex loop 18 and is returned to the print surface 10 in a flipped position, as has been shown in Fig. 5. The printed front side image 36 is now on the side of the sheet 16 facing away from the viewer in Fig. 5 and has therefore been shown only in dotted lines. Further, the first edge A of the sheet 16, which has been the trailing edge in the first print pass, has now become the leading edge in the second print pass.

If the sheet 16 has not been subject to any rotation during its path through the duplex loop 18, as has been assumed here, the lateral direction x of the printed image 36 has not changed, and this direction is still parallel with the direction defined by the guide rail 20. In that case, the inclination of the first edge A in the position shown in Fig. 5 is the mirror image of the inclination of the same edge A in the position shown in Fig. 4.

The sheet 16 is then fed past the print head assembly 12 in order to print a back side image 40 onto the sheet, as has been shown in Fig. 6.

In order for the back side image 40 to be exactly in registry with the front side image 36, the sheet 16 must not be rotated. Would the sheet 16 be rotated in order to align the first edge A with the lateral direction x of the back side image 40, then the previously printed front side image 36 would participate in the rotation, and the images 36 and 40 would not be in registry.

Based on the angle between the first edge A and the straight line defined by the marks 38 in Fig. 4 it is possible to calculate a target position 42 for the first edge A in Fig. 6 such that the images 36 and 40 are exactly in registry when the first edge A coincides with the target position 42.

In cases where the sheet 36 has been subject to any unintended rotation during its path through the duplex loop 18, there would be an angular deviation between the first edge A and the target position 42 in Fig. 6, and sheet 16 would be rotated by means of the skew correction device 26 in order to correct that deviation.

Dashed lines in Fig. 2 illustrate a case where, due to some error, the second edge B of the sheet 16 has not been aligned correctly with the lateral direction x of the front side image 36, i.e., the sheet 16 is rotated by a certain angle. As is shown in Fig. 4, this has the consequence that the detection system 22 measures a different angle between the first edge A and the lateral direction x as indicated by the marks 38. Since this measured angle forms the basis for the calculation of the target position 42 in Fig. 5, the line indicating the target position is also rotated by the same amount, but in opposite direction. Consequently, as long as no extra rotation of the sheet has occurred during the path through the duplex loop, the rotated first edge A of the sheet will again coincide with the rotated target position, and the back side image 40 will again be printed in exact registry with the front side image 36.

In cases where a misalignment of the second edge B has occurred in the situation shown in Fig. 2 and, in addition, an unintended rotation of the sheet has occurred in the duplex loop, the calculation of the target position 42 will result in a rotation of the sheet 16 just by the right amount to cancel the rotation that has occurred in the duplex loop but to preserve the misalignment in Fig. 2, so that the front side and back side images 36 and 40 will again be in perfect registry.

As has been explained in the opening paragraphs of this description, a misalignment of the second edge B of the sheet in the first pass (Fig. 2) has a smaller impact on the visual impression than a misalignment of the front side and the back side images 36, 40. Therefore, in order to enhance production, the procedure for skew angle correction by means of the skew correction device 26 in Fig. 2 may be accelerated at the cost of accuracy, whereas the rotation of the sheet 16 for aligning the first edge A with the target position 42 in Fig. 6 may be performed with smaller rotational speeds of the rollers 32 in order to obtain a higher accuracy.

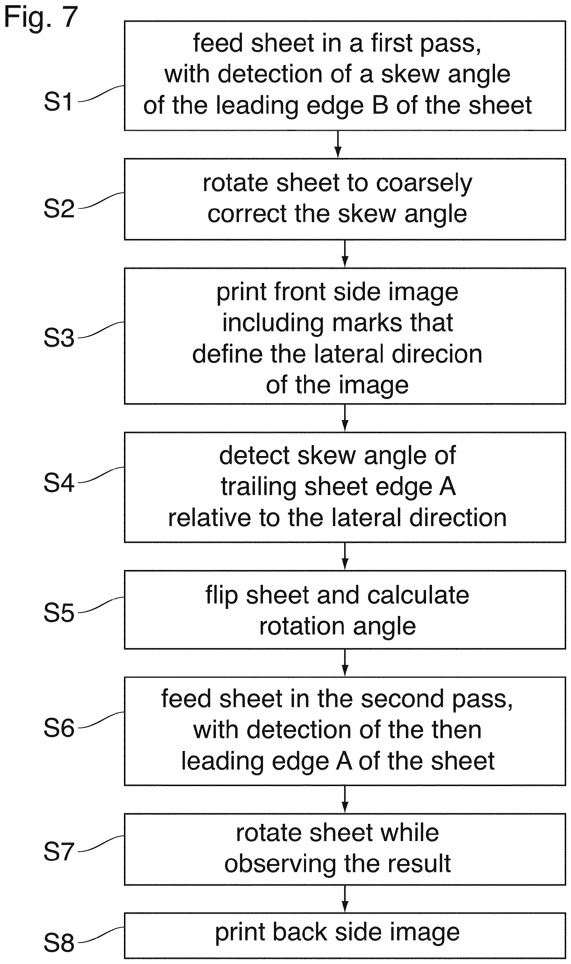

Fig. 7 summarizes the essential steps of a method according to the invention in a flow diagram.

In step S1, the sheet 16 is fed past the print head assembly 12 in the first pass in order to print the front side image 36. The skew angle of the leading second edge B of the sheet is detected before the print process starts.

If necessary, the sheet is rotated in step S2 in order to correct the skew angle at least coarsely, i.e. in order to align the second edge B of the sheet with the lateral direction x of the front side image 36.

In step S3, the front side image 36 and the marks 38 are printed. Then, a skew angle between the trailing first edge A of the sheet and the straight line defined by the marks 38 is detected in step S4. This skew angle may result from a non-parallelism of the sheet edges A and B and/or from an error in the alignment procedure in step S2.

In step S5, the sheet 16 is flipped by returning it through the duplex loop 18, and a rotation angle which is required for aligning the front side image 36 and the back side image 40 is calculated, e.g. by calculating the target position 42 for the first edge A.

The sheet 16 is then fed past the print head assembly 12 in the second pass. The first edge A of the sheet, which is now the leading edge, can be detected as soon as it reaches the field of view 24 of the optical detection system 22.

Then, in step S7, the sheet 17 is rotated (if necessary) in order to align the first edge A with the target position 42. Optionally, the result of the rotation may be checked by means of the detection system 22, and a correction may be made, if necessary.

Finally, the back side image 40 is printed in step S8.

Fig. 8 illustrates another embodiment of a printer according to the present invention. The embodiment in Fig. 8 differs from the above described embodiments in that the sheet transport is continuous and not step-wise to increase productivity.

Over the print surface 110 a stationary, page-wide print head assembly 112 is provided. Sheets 16 are conveyed over the print surface 110 and past the print head assembly 112, while the print head array 112 deposits an image over the full width of the sheet 16. Since the print head array 112 is page-wide, i.e. extending over the width of the print surface 110, the sheet 16 may be conveyed without stopping while the image is printed. Thereby, productivity is increased.

An optical detection system 122 is provided upstream of the print head assembly 12 in the main scanning direction in order to determine the orientation of a leading and/or trailing edge of the sheet 16 with respect to the stationary print head assembly 112. The optical detection system 122 is further provided upstream of the skew angle correction system 126. The optical detection system 122 sends control commands to the skew angle correction system 126, such that the alignment of the sheet 16 may be corrected before said sheet 16 reaches the print head array 112.

To align the sheet 16 with respect to the print head array 112, a skew angle correction system 126 is provided upstream of the print head assembly 112 for correcting possible skew angles of the sheets 16. The skew angle correction system 126 comprises a pair of correction rollers or wheels 126A, 126B. Each correction roller 126A, 126B comprises an actuator for setting the angular velocity of said correction roller 126A, 126B. The correction rollers 126A, 126B further are each pivotable or rotatable around their individual pivot axes perpendicular to the print surface 110. Thereby, sheets 16 may be rotated and translated over the print surface 110 during continuous transport.
The printer is a duplex printer, as described with respect to Fig. 3.

The optical detection system 122 is configured to detect the skew angle of the leading edge of the sheet 16 on its first pass along the print head assembly 112. The determined skew angle data is then transmitted to the skew angle correction system 126 to register the sheet 16 with respect to the print head assembly 112, such that a first or simplex image is printed on a first side of the aligned sheet 16. The optical detection system 122 further determines the skew angle of the trailing edge of the sheet 16 on its first pass. The sheet 16 then passes onto the duplex pass for flipping and duplex printing. The trailing edge becomes the leading edge of the sheet 16.

After flipping the sheet 16 for duplex printing, the sheet 16 is conveyed on its second pass over the print surface 110 towards the print head assembly 112. The optical detection system 122 then determines the skew angle of the leading edge of the flipped sheet 16, which skew angle data is transmitted to the skew angle correction system 126. When registering the flipped sheet 16, the skew angle correction system 126 takes into account the skew angle data of the trailing edge of the sheet 16 on its first pass, such that the second or duplex image on a second side the sheet 16 will be aligned with the simplex image on the first side of the sheet 16. Basically, the skew angle correction system 126 adds or subtracts the skew angle of the trailing edge of the sheet 16 on its first pass to the detected skew angle of the leading edge on the duplex pass to correct for the relative misalignment of the leading and trailing edges.

## Claims

1. A method of duplex printing, comprising the steps of:
a) feeding a media sheet (16) past a print head assembly (12; 112) in a first pass and printing a front side image (36) on a front side of the sheet (16);
b) measuring a skew angle of a first edge (A) of the sheet (16) relative to a reference direction, the first edge being a trailing edge of the sheet in the first pass;
c) flipping the sheet (16) and feeding it to the print head assembly (12; 112) with the first edge (A) as the leading edge;
d) calculating and performing a rotation of the sheet (16) relative to a back side image (40) to be printed on the back side of the sheet (16), the rotation being required for registering the back side image (40) with the front side image (36); and
e) printing the backside image (40) in a second pass,
**characterized in that** step a) comprises printing on the sheet (16) at least two marks (38) which define a lateral direction (x) of the front side image (36), and said lateral direction (x) is used as the reference direction in step b).

2. The method according to claim 1, wherein the marks (38) form part of the front side image (36).

3. The method according to claim 1 or 2, wherein the marks (38) are printed in positions adjacent to the first edge (A) of the sheet (16).

4. The method according to any of the preceding claims, wherein an optical detection system (22; 122) is used for detecting the marks (38) and the first edge (A) of the sheet (16) in step b).

5. The method according to claim 4, wherein the optical detection system has a field of view (24) which, at least at a certain instant during the feed movement of the sheet (16), includes the marks (38) and at least a part of the first edge (A) of the sheet.

6. The method according to claim 4 or 5, wherein the optical detection system (22; 122) is used also for detecting a direction of a second edge (B) of the sheet (16), which second edge (B) is a leading edge in the first pass, and a skew angle correction system (26; 126) is used for rotating the sheet (16) so as to align the direction of the second edge (B) of the sheet with the lateral direction (x) of the front side image (36).

7. The method according to claim 5 or 6, wherein the optical detection system (22; 122) detecting the edge (A, B) of the sheet (16) and said at least a part of the printed front side image (36) is used for calibrating a position of the optical detection system (22; 122) relative to the print head assembly (12; 112).

8. The method according to claim 6 or 7, wherein the same skew angle correction system (26; 126) is used for rotating the sheet (16) in step d).

9. A duplex printer comprising a print surface (10; 110); a print head assembly (12; 112) facing the print surface (10; 110); a sheet conveying system (14) arranged to feed media sheets (16) over the print surface (10; 110) and past the print head assembly (12; 112), the sheet conveying system (14) including a duplex loop (18); a skew angle correction system (26; 126) arranged to rotate the sheets (16) relative to images (36, 40) to be printed thereon; a detection system (22; 122) arranged to detect an edge (A; B) of the sheet (16) and a part (38) of an image printed on the sheet; and an electronic controller (28) receiving signals from the detection system (22; 122) and controlling the print head assembly (12; 122), the sheet conveying system (14) and the skew angle correction system (26; 126), **characterized in that** the controller (28) is configured to perform the method according to any of the preceding claims.

10. A computer program product comprising program code on a non-transitory code on a non-transitory computer-readable medium, said program code, when run on an electronic controller (28) of a duplex printer according to the preamble of claim 9, causing the controller (28) to perform the steps of the method according to claim 1.

## Patentansprüche

1. Verfahren zum Duplexdruck, umfassend die Schritte:
a) Zuführen eines Medienblatts (16) in einem ersten Durchgang an einer Druckkopfanordnung (12; 112) vorbei und Drucken eines Vorderseitenbildes (36) auf eine Vorderseite des Blatts (16);
b) Messen eines Schräglaufwinkels einer ersten Kante (A) des Bogens (16) relativ zu einer Referenzrichtung, wobei die erste Kante eine Hinterkante des Bogens in dem ersten Durchgang ist;
c) Umdrehen des Blattes (16) und Zuführen zu der Druckkopfanordnung (12; 112) mit der ersten Kante (A) als Vorderkante;
d) Berechnen und Durchführen einer Drehung des Blattes (16) relativ zu einem Rückseitenbild (40), das auf die Rückseite des Blattes (16) gedruckt werden soll, wobei die Drehung zum Registrieren des Rückseitenbildes (40) mit erforderlich ist das Vorderseitenbild (36); und
e) Drucken des Rückseitenbildes (40) in einem zweiten Durchgang,
**dadurch gekennzeichnet, dass** Schritt a) das Bedrucken des Bogens (16) mit mindestens zwei Markierungen (38) umfasst, die eine seitliche Richtung (x) des Vorderseitenbildes (36) definieren, und die seitliche Richtung (x) als Referenz verwendet wird Richtung in Schritt b).

2. Verfahren nach Anspruch 1, wobei die Markierungen (38) bilden einen Teil der vorderen Seitenbild (36).

3. Verfahren nach Anspruch 1 oder 2, bei dem die Markierungen (38) an Positionen neben der ersten Kante (A) des Bogens (16) gedruckt werden.

4. Verfahren nach einem der vorhergehenden Ansprüche, wobei eine optische Detektionssystem (22; 122) zum Erfassen der Markierungen verwendet wird (38) und die erste Kante (A) des Blattes (16) in Schritt b).

5. Verfahren nach Anspruch 4, **dadurch gekennzeichnet, dass** das optische Erfassungssystem ein Sichtfeld (24) aufweist, das zumindest zu einem bestimmten Zeitpunkt während der Vorschubbewegung des Bogens (16) die Markierungen (38) und zumindest aufweist ein Teil der ersten Kante (A) des Blattes.

6. Verfahren nach Anspruch 4 oder 5, bei dem das optische Erfassungssystem (22; 122) auch zum Erfassen einer Richtung einer zweiten Kante (B) des Bogens (16) verwendet wird, wobei die zweite Kante (B) eine ist Vorderkante im ersten Durchgang und ein Schrägwinkelkorrektursystem (26; 126) wird zum Drehen des Bogens (16) verwendet, um die Richtung der zweiten Kante (B) des Bogens mit der seitlichen Richtung (x) auszurichten. des Vorderseitenbildes (36).

7. Verfahren nach Anspruch 5 oder 6, wobei das optische Erfassungssystem (22; 122) die Kante (A, B) des Bogens (16) und den mindestens einen Teil des gedruckten Vorderseitenbildes (36) erfasst wird zum Kalibrieren einer Position des optischen Erfassungssystems (22; 122) relativ zur Druckkopfanordnung (12; 112) verwendet.

8. Verfahren nach Anspruch 6 oder 7, wobei in Schritt d) das gleiche Schrägwinkelkorrektursystem (26; 126) zum Drehen des Bogens (16) verwendet wird.

9. Duplexdrucker mit einer Druckfläche (10; 110); eine Druckkopfanordnung (12; 112), die der Druckfläche (10; 110) zugewandt ist; ein Blatttransportsystem (14), das angeordnet ist, um Medienblätter (16) über die Druckoberfläche (10; 110) und an der Druckkopfanordnung (12; 112) vorbei zu transportieren, wobei das Blatttransportsystem (14) eine Duplexschleife (18) enthält; ein Schrägwinkelkorrektursystem (26; 126), das angeordnet ist, um die Blätter (16) relativ zu den darauf zu druckenden Bildern (36, 40) zu drehen; ein Erfassungssystem (22; 122), das angeordnet ist, um eine Kante (A; B) des Blatts (16) und einen Teil (38) eines auf das Blatt gedruckten Bildes zu erfassen; und eine elektronische Steuerung (28), die Signale von dem Erfassungssystem (22; 122) empfängt und die Druckkopfanordnung (12; 122), das Blattfördersystem (14) und das Schrägwinkelkorrektursystem (26; 126) steuert, **dadurch gekennzeichnet, dass** die Steuerung (28) konfiguriert ist, um das Verfahren nach einem der vorhergehenden Ansprüche durchzuführen.

10. Computerprogrammprodukt, umfassend einen Programmcode auf einem nichtflüchtigen Code auf einem nichtflüchtigen computerlesbaren Medium, wobei der Programmcode auf einer elektronischen Steuerung (28) eines Duplexdruckers gemäß dem Oberbegriff von Anspruch 9 abläuft. Bewirken, dass die Steuerung (28) die Schritte des Verfahrens nach Anspruch 1 ausführt.

## Revendications

1. Procédé d'impression recto verso, comprenant les étapes consistant à:
a) alimenter une feuille de support (16) au- delà un ensemble de tête d'impression (12; 112) dans un premier passage et impression d'une image du côté avant (36) sur un côté avant de la feuille (16);
b) mesurer un angle d'inclinaison d'un premier bord (A) de la feuille (16) par rapport à une direction de référence, le premier bord étant un bord de fuite de la feuille lors du premier passage;
c) retourner la feuille (16) et l'amener dans l'ensemble de tête d'impression (12; 112) avec le premier bord (A) comme bord d'attaque;
d) calculer et effectuer une rotation de la feuille (16) par rapport à une image du côté arrière (40) devant être imprimée sur le côté arrière de la feuille (16), la rotation étant nécessaire pour enregistrer l'image du côté arrière (40) avec l'image du côté avant (36); et
e) imprimer l'image de face arrière (40) lors d'une seconde passe,
**caractérisé en ce que** l'étape a) comprend l'impression sur la feuille (16) d'au moins deux marques (38) définissant une direction latérale (x) de l'image de face avant (36), et ladite direction latérale (x) est utilisée comme référence direction à l'étape b).

2. Procédé selon la revendication 1, dans lequel les marques (38) font partie de l'image de face avant (36).

3. Procédé selon la revendication 1 ou 2, dans lequel les marques (38) sont imprimées dans des positions adjacentes au premier bord (A) de la feuille (16).

4. Procédé selon l'une quelconque des revendications précédentes, dans lequel un système de détection optique (22; 122) est utilisé pour détecter les marques (38) et le premier bord (A) de la feuille (16) à l'étape b).

5. Procédé selon la revendication 4, dans lequel le système de détection optique a un champ de vision (24) qui, au moins à un certain moment lors du mouvement d'alimentation de la feuille (16), comprend les marques (38) et au moins une partie du premier bord (A) de la feuille.

6. Procédé selon la revendication 4 ou 5, dans lequel le système de détection optique (22; 122) est également utilisé pour détecter une direction d'un deuxième bord (B) de la feuille (16), lequel deuxième bord (B) est le bord d'attaque dans la première passe, et un système de correction d'angle de biais (26; 126) est utilisé pour faire tourner la feuille (16) de manière à aligner la direction du second bord (B) de la feuille avec la direction latérale (x) de l'image du côté avant (36).

7. Procédé selon la revendication 5 ou 6, dans lequel le système de détection optique (22; 122) détecte le bord (A, B) de la feuille (16) et ladite au moins une partie de l'image de côté avant imprimée (36). est utilisé pour calibrer une position du système de détection optique (22; 122) par rapport à l'ensemble de tête d'impression (12; 112).

8. Procédé selon la revendication 6 ou 7, dans lequel le même système de correction d'angle de biais (26; 126) est utilisé pour faire tourner la feuille (16) à l'étape d).

9. une imprimante recto-verso comprenant une surface d'impression (10; 110); un ensemble de tête d'impression (12; 112) faisant face à la surface d'impression (10; 110); un système de transport de feuilles (14) conçu pour alimenter des feuilles de support (16) sur la surface d'impression (10; 110) et au-delà de l'ensemble de tête d'impression (12; 112), le système de transport de feuilles (14) comprenant une boucle duplex (18); un système de correction d'angle d'inclinaison (26; 126) agencé pour faire tourner les feuilles (16) par rapport aux images (36, 40) à imprimer dessus; un système de détection (22; 122) agencé pour détecter un bord (A; B) de la feuille (16) et une partie (38) d'une image imprimée sur la feuille; et un contrôleur électronique (28) recevant des signaux du système de détection (22; 122) et commandant l'ensemble de tête d'impression (12; 122), le système de transport de feuilles (14) et le système de correction d'angle de biais (26; 126), **caractérisé en ce que** le contrôleur (28) est configuré pour exécuter le procédé selon l'une quelconque des revendications précédentes.

10. Produit programme d'ordinateur comprenant un code de programme sur un code non transitoire sur un support lisible par ordinateur non transitoire, ledit code de programme, lorsqu'il est exécuté sur un contrôleur électronique (28) d'une imprimante recto verso selon le préambule de la revendication 9, amener le contrôleur (28) à exécuter les étapes du procédé selon la revendication 1.
